Europäisches Patentamt

European Patent Office

Office européen des brevets

⑱

(11) Publication number: **0 070 260**
**B1**

# EUROPEAN PATENT SPECIFICATION

(12)

(45) Date of publication of patent specification: **21.08.85**

(21) Application number: **82830178.8**

(22) Date of filing: **16.06.82**

(51) Int. Cl.⁴: **A 01 F 12/18,** A 01 F 7/06

(54) An axial-flow thresher-separator unit for combine harvesters.

(30) Priority: **13.07.81 IT 6796881**

(43) Date of publication of application:
**19.01.83 Bulletin 83/03**

(45) Publication of the grant of the patent:
**21.08.85 Bulletin 85/34**

(84) Designated Contracting States:
**BE DE FR GB**

(56) References cited:
**DE-A-2 812 655**
**FR-A-2 302 679**
**US-A-4 154 250**

(73) Proprietor: **PIETRO LAVERDA S.p.A.**
**I-36042 Breganze (Vicenza) (IT)**

(72) Inventor: **Raineri, Giuseppe**
**Via Bellini 20/22**
**I-36061 Bassano del Grappa (Vicenza) (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to combine harvesters provided with axial-flow thresher-separator units.

In particular, the invention concerns an axial-flow thresher-separator unit for combine harvesters, of the type comprising a thresher-separator cylinder and a separator casing in the form of a perforated tubular body of circular section surrounding the thresher-separator cylinder, and cleaning means comprising at least one cleaning member movable adjacent an upper part of the outer surface of the separator casing for preventing part of the separated material from accumulating in this zone.

In thresher-separator units of the type specified above, the harvested product follows a helical path around the thresher-separator cylinder, moving axially from one end thereof to the other. This allows the efficiency of the threshing and separating action to be improved relative to conventional thresher units in which the harvested product passes through a space between the thresher concave and the threshing cylinder moving in a direction perpendicular to the axis of the latter.

Thresher-separator units of the axial-flow type, however, have the disadvantage that, when the upper part of the separator casing is also perforated, part of the separated material may accumulate in the apertures of this upper part and clog this zone.

In order to solve this problem, axial-flow thresher-separator units have already been used (see DE—A—2 812 655 and US—A—4 154 250) which are provided with a cleaning member movable adjacent the outer surface of the separator casing following a path parallel to the axis of the thresher-separator cylinder, reciprocating from one end of this casing to the other. Thus, the material removed from the upper part of the separator casing is conveyed towards the ends of the casing where it tends to be compressed against the sides of the harvester causing new clogging.

In order to avoid this disadvantage, the present invention has as its subject an axial-flow thresher-separator unit of the aforesaid type, the main characteristic of which lies in the fact that the cleaning member is in form of an elongate member extending parallel to the axis of the thresher-separator cylinder and is arranged to move on the outer surface of the separator casing, following a path which is substantially in the form of an arc of a circle lying in a plane substantially perpendicular to the axis of the thresher-separator cylinder.

Further characteristics and advantages of the present invention will become clearer from the description which follows with reference to the appended drawings, provided purely by way of non-limiting example, in which:

Figure 1 is a schematic side view of the front part of a combine harvester provided with a thresher-separator unit according to the present invention;

Figure 2 is a perspective view of the thresher-separator unit according to the invention;

Figure 3 is a perspective view illustrating a detail of Figure 2, and

Figure 4 shows a detail of Figure 1 on an enlarged scale.

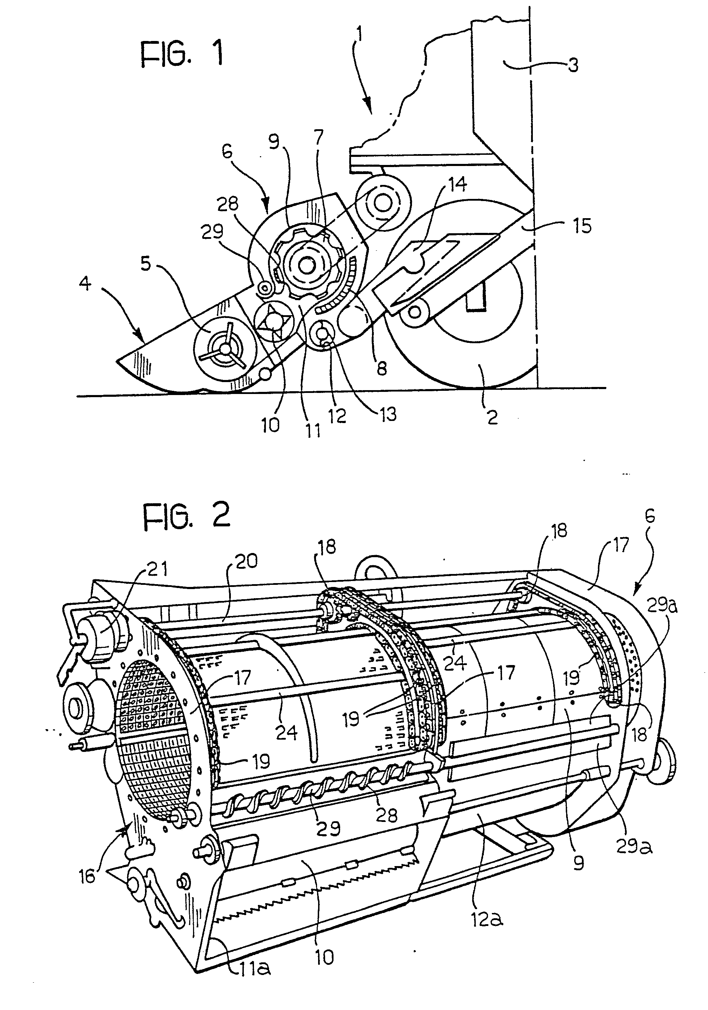

The combine harvester illustrated in Figure 1, and generally indicated by the reference numeral 1, is of a general type.

It is clear, however, that the thresher-separator unit according to the present invention may also be applied to combine harvesters of a different type.

With reference to Figure 1, the combine harvester includes wheels 2 (of which only the front ones are visible in the Figure) on which is mounted a fixed structure 3.

At the front, the combine harvester 1 carries a cutting table 4 including a feed auger 5 of a known type.

Behind the feed auger 5 is a thresher-separator unit 6 of the axial-flow type, which is illustrated in perspective in Figure 2.

The thresher-separator unit 6 comprises a thresher-separator cylinder 7 arranged transversely of the longitudinal axis of the harvester, a thresher concave 8 constituted by a concave grille which surrounds a lower part of the thresher-separator cylinder 7, and a separator casing 9 constituted by a perforated tubular body surrounding that part of the cylinder 7 not covered by the thresher concave 8.

The separator casing 9 has an opening 11 (see Figure 1) at one end for feeding the harvested product through into the space between the cylinder 7 and the casing 9. The thresher-spearator unit 6 includes a fixed support structure 16 (see Figure 2) defining a mouth 11a for conveying the product in correspondence with the opening 11 in the separator casing 9.

A transverse feed roller 10 is located in the mouth 11a for receiving the product from the auger 5 and conveying it to the unit 6.

The product fed into the separator casing 9 follows a helical path around the thresher-separator cylinder 7, moving towards the opposite end of the cylinder. When it has reached this end, the material which does not pass through the apertures of the separator casing is discharged directly onto the ground so as to form a windrow alongside the harvester. The remaining material separated during the movement of the product around the thresher cylinder, on the other hand, falls beneath the separator casing 9 and is deposited on a collecting floor 12 (see Figure 1) located below the thresher-separator unit 6.

In the practical example illustrated, the combine harvester is provided with an auger 13 located in correspondence with the collecting floor 12 for conveying the grain towards the loading end of a bladed elevator 14 which transports the grain, with the aid of a second elevator 15, to the cleaning members (not illustrated) located in the rear part of the harvester. These members are of a known type and do not fall within the scope of the present invention.

Figure 2 illustrates the thresher-separator unit 6 in perspective without the thresher-separator cylinder 7.

The fixed support structure 16 of the unit 6 includes three ribs 17 (one of which is illustrated in Figure 4) located at the ends and the centre of the separator casing 9, respectively.

The ribs 17, which are constituted by sheet metal panels disposed in planes perpendicular to the axis of the thresher-separator cylinder, rotatably support pulleys 18 (see Figure 4) with which two pairs of endless chains 19 are engaged.

As illustrated in detail in Figure 4, each chain 19 engages three pulleys 18 of which one is disposed higher up and two lower down. The upper pulley is connected for rotation with the corresponding pulleys of the other chains 19 by means of a shaft 20 (see Figure 2) which is rotated by means of a conventional transmission (not illustrated) through a torque limiter 21.

As illustrated in Figure 4, each chain 19 is further provided with a chain tensioning device 22 and guide members 23 arranged so that each chain 19 has an internal section 19a and an external section 19b lying in an arc of a circle adjacent the upper part of the outer surface of the casing 9.

The four chains 19 support, in pairs, a pair of rods 24 arranged to act as cleaning members for preventing part of the separated material from accumulating in the upper part of the separator casing 9.

Each rod 24 has its two ends fixed to the corresponding chains 19.

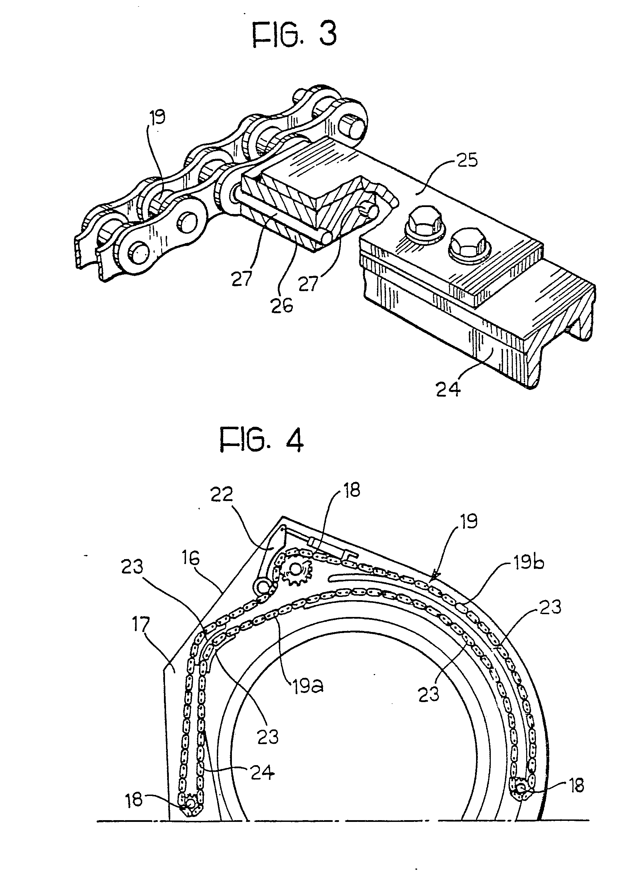

In the practical embodiment illustrated (see Figure 3), each rod 24 has a C-section with its concave side facing the surface of the casing, and is provided at each end with a plate 25 which is fixed to the rod 24 by means of screws and on which an apertured body 26 is welded, being mounted on extensions of two pins 27 of the chain 19.

The fixed structure 16 of the thresher-separator unit further includes a collecting floor 28 located adjacent the part of the separator casing 9 in correspondence with which is located the inlet opening 11. This collecting floor 28 is intended to receive the product separated by the initial part of the separator casing and prevent this product from falling into the inlet opening 11.

A screw conveyor 29 is located in correspondence with the collecting floor 28 to carry the material deposited on the collecting floor 28 towards that part of the unit 6 located beyond the opening 11. Having reached this zone, the material falls onto a guide wall 12a which directs the material towards the collecting floor 12. The shaft of the screw 29 is extended beyond the opening 11 and is provided on this extension with radial blades 29a which facilitate the discharge of the product onto the wall 12a.

During the operation of the harvester, the chains 19 are driven so as to move the rods 24 adjacent the upper part of the outer surface of the separator casing 9. Each rod 24 moves adjacent the outer surface of the casing 9 through an angle of about 200° removing any material which tends to accumulate in this zone. With reference to Figure 4, each rod moves along the section 19a in an anti-clockwise sense relative to the casing 9 and along the section 19b in a clockwise sense. Not withstanding that the section 19b is further from the surface of the casing 9 than the section 19a, the cleaning action of the rod 24 is found to be efficient even when the rod moves along the section 19b, as has been shown by tests carried out by the Applicants. Clearly, it is possible to use any number of rods 24 to cover the length of the separator casing, just as it is also possible to provide each pair of chains 19 with more than one cleaning rod 24.

## Claims

1. Axial-flow thresher-separator unit (6) for combine harvesters (1), comprising a thresher-separator cylinder (7) and a separator casing (9) in the form of a perforated tubular body of circular section surrounding the thresher-separator cylinder (7), and cleaning means comprising at least one cleaning member (24) movable adjacent an upper part of the outer surface of the separator casing (9) to prevent part of the separated material from accumulating in this zone, characterised in that the cleaning member (24) is in form of an elongate member extending parallel to the axis of the thresher-separator cylinder (7) and is arranged to move on the outer surface of the separator casing (9) along a path which is substantially in the form of an arc of a circle lying in a plane substantially perpendicular to the axis of the thresher-separator cylinder (7).

2. A thresher-separator unit as claimed in Claim 1, characterised in that the cleaning member is constituted by a rod (24) arranged parallel to the axis of the thresher-separator cylinder (7).

3. A thresher-separator unit as claimed in Claim 2, characterised in that the cleaning means further include two spaced-apart endless chains (19) disposed in planes substantially perpendicular to the axis of the thresher-separator cylinder (7), and means (18, 20) for driving the chains (19) simultaneously, and in that the ends of the rod (24) are fixed to these chains (19).

4. A thresher-separator unit as claimed in Claim 2, characterised in that the rod (24) has a C-section with its concave side facing the surface of the separator casing (9).

5. A thresher-separator unit as claimed in Claim 1, characterised in that the unit (6) includes a series of cleaning members (24), each constituted by a rod disposed parallel to the axis of the thresher-separator cylinder (7).

6. A thresher-separator unit as claimed in Claim 5, characterised in that each of said rods (24) covers a part of the length of the separator casing (9).

7. A thresher-separator unit as claimed in Claim 1, characterised in that the path of the cleaning member (24) covers an arc of about 200°.

**Revendications**

1. Unité séparateur-batteur à écoulement axial (6) pour moissonneuse-batteus (1) comprenant un cylindre séparateur-batteur (7) et un carter de séparateur (9) ayant la forme d'un corps tubulaire perforé de section circulaire entourant le cylindre séparateur-batteur (7), et des moyens de nettoyage comprenant au moins un élément de nettoyage (24) mobile de manière adjacente à la partie supérieure de la surface extérieure du carter de séparateur 9 pour empêcher qu'une partie des matières séparées ne s'accumule dans cette zone, caractérisée en ce que l'élément de nettoyage (24) a la forme d'un élément allongé s'étendant parallèlement à l'axe du cylindre séparateur-batteur (7) qu'il est monté de manière à se déplacer sur la surface extérieure du carter du séparateur 9 suivant un parcours qui a sensiblement la forme d'un arc de cercle situé dans un plan sensiblement perpendiculaire à l'axe du cylindre séparateur-batteur (7).

2. Unité séparateur-batteur selon la revendication 1, caractérisée en ce que l'élément de nettoyage est constitué par une barre (24) disposée parallèlement à l'axe du cylindre séparateur-batteur (7).

3. Unité séparateur-batteur selon la revendication 2 caractérisée en ce que les moyens de nettoyage comportent en outre deux chaînes sans fin séparées (19) disposées dans des plans sensiblement perpendiculaires à l'axe du cylindre séparateur-batteur (7), et des moyens (18, 20) pour entraîner les chaînes (19) simultanément, et en ce que les extrémités de la barre (24) sont fixées sur ces chaînes (19).

4. Unité séparateur-batteur selon la revendication 2, caractérisée en ce que la barre (24) a une section en forme de C dont la concavité est tournée vers la surface du carter du séparateur (9).

5. Unité séparateur-batteur selon la revendication 1, caractérisée en ce que l'unité (6) comporte une série d'éléments de nettoyage (24), constitutés chacun par une barre disposée parallèlement à l'axe du cylindre séparateur-batteur (7).

6. Unité séparateur-batteur selon la revendication 5, caractérisée en ce que chacune desdites barres (24) couvre une partie de la longueur du carter (9) du séparateur.

7. Unité séparateur-batteur selon la revendication 1, caractérisée en ce que le parcours de l'élément de nettoyage (24) couvre un arc de cercle d'environ 200 degrés.

**Patentansprüche**

1. Axialfluß-Dresch- und Trennvorrichtungseinheit (6) für Mähdrescher (1), mit einem Dresch-Trennzylinder (7) und einem Trenngehäuse in Gestalt eines perforierten Rohrkörpers von kreisförmigem Querschnitt, der den Dresch-Trennzylinder (7) umgibt, und einer Reinigungseinrichtung, die wenigstens ein Reinigungsglied (24) aufweist, das benachbart einem oberen Teil der Außenfläche des Trenngehäuses (9) verschiebbar ist, um zu verhindern, daß sich ein Teil des getrennten Materials in dieser Zone ansammelt, dadurch gekennzeichnet, daß das Reinigungsglied (24) die Gestalt eines länglichen Gliedes aufweist, das sich parallel zu der Achse des Dresch-Trennzylinders (7) erstreckt und so angeordnet ist, daß es sich auf der Außenfläche des Trenngehäuses (9) entlang einer Bahn bewegt, die im wesentlichen die Gestalt eines Kreisbogens besitzt, der in einer Ebene liegt, welche im wesentlichen senkrecht zur Achse des Dresch-Trennzylinders (7) ist.

2. Dresch- und Trennvorrichtungseinheit nach Anspruch 1, dadurch gekennzeichnet, daß das Reinigungsglied durch eine Stange (24) gebildet wird, die parallel zur Achse des Dresch-Trennzylinders (7) angeordnet ist.

3. Dresch- und Trennvorrichtungseinheit nach Anspruch 2, dadurch gekennzeichnet, daß die Reinigungseinrichtung ferner zwei beabstandete endlose Ketten (19) umfaßt, welche in Ebenen angeordnet sind, die im wesentlichen senkrecht zur Achse des Dresch-Trennzylinders (7) sind, sowie eine Einrichtung (18, 20) zum gleichzeitigen Antreiben der Ketten (19), und daß die Enden der Stange (24) an diesen Ketten (19) befestigt sind.

4. Dresch- und Trennvorrichtungseinheit nach Anspruch 2, dadurch gekennzeichnet, daß die Stange (24) einen C-Querschnitt aufweist, dessen konkave Seite zu der Fläche des Trenngehäuses (9) hinweist.

5. Dresch- und Trennvorrichtungseinheit nach Anspruch 1, dadurch gekennzeichnet, daß die Einheit (6) eine Reihe von Reinigungsgliedern (24) umfasst und daß jedes Glied durch eine Stange gebildet ist, die parallel zur Achse des Dresch-Trennzylinders angeordnet ist.

6. Dresch- und Trennvorrichtungseinheit nach Anspruch 5, dadurch gekennzeichnet, daß jedes Reinigungsglied (24) einen Längsteil des Trenngehäuses (9) deckt.

7. Dresch- und Trennvorrichtungseinheit nach Anspruch 1, dadurch gekennzeichnet, daß das Reinigungsglied (24) entlang einem Bogen von etwa 200° bewegbar ist.

FIG. 1

FIG. 2

# FIG. 3

# FIG. 4